(19)

**Europäisches Patentamt**
**European Patent Office**
**Office européen des brevets**

(11) **EP 4 782 877 A1**

(12) **EUROPEAN PATENT APPLICATION**

(43) Date of publication:
**29.07.2026  Bulletin 2026/31**

(21) Application number: **25222567.7**

(22) Date of filing: **11.12.2025**

(51) International Patent Classification (IPC):
*G01S 7/486* (2020.01)     *G01S 7/487* (2006.01)
*G01S 17/18* (2020.01)     *G01S 17/46* (2006.01)
*G01S 17/89* (2020.01)     *G01S 17/931* (2020.01)
*H04N 13/204* (2018.01)    *H04N 23/56* (2023.01)
*G06V 10/25* (2022.01)

(52) Cooperative Patent Classification (CPC):
**G01S 17/931; G01S 7/4868; G01S 7/4876;**
**G01S 17/18; G01S 17/46; G01S 17/89;**
**G06V 10/143; G06V 10/147; G06V 10/60;**
**G06V 20/56; H04N 13/204; H04N 23/11;**
**H04N 23/56; H04N 23/73; H04N 23/74**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **22.01.2025  JP 2025008965**

(71) Applicant: **Canon Kabushiki Kaisha**
**Tokyo, 146-8501 (JP)**

(72) Inventor: **NAKAZAWA, Tomonori**
**Tokyo, 146-8501 (JP)**

(74) Representative: **TBK**
**Bavariaring 4-6**
**80336 München (DE)**

(54) **IMAGING APPARATUS, IMAGING METHOD, AND STORAGE MEDIUM**

(57)    An imaging apparatus (100, 200) includes: a light emitting unit (201) configured to emit pulsed light; an imaging unit (102) configured to generate an image signal by exposure with reflected light acquired by causing the pulsed light to strike a subject and be reflected; and a control unit (105) configured to control a light emission timing of the light emitting unit (201) and an exposure timing of the imaging unit (102) such that the reflected light from the subject within a predetermined distance range from the imaging unit (102) is exposed by the imaging unit (102). The control unit (105) changes an operating area for performing a predetermined operation in the imaging unit (102) on the basis of the predetermined distance range.

FIG. 8

```
START
   |
DETERMINE HEIGHT Hc OF CAMERA 100          ~S11
   |
DETERMINE LIGHT EMISSION TIME OF LIGHT
EMITTER 200 AND EXPOSURE TIME AND          ~S12
EXPOSURE TIMING OF CAMERA 100
   |
DETERMINE PIXEL RANGE IN WHICH
PHOTOELECTRIC CONVERSION ELEMENT 102       ~S13
IS CAUSED TO OPERATE
   |
ACQUIRE IMAGE SIGNAL BY PERFORMING
IMAGING THROUGH RANGE GATE CONTROL         ~S14
   |
PERFORM STANDBY PROCESS FOR TIME
CORRESPONDING TO OPERATING TIME OF         ~S15
NON-OPERATING PIXEL REGION
   |
END
```

EP 4 782 877 A1

**Description**

TECHNICAL FIELD

The present disclosure relates to an imaging apparatus, an imaging method, a storage medium, and the like.

BACKGROUND

In recent years, distance-measuring camera systems that use the principle of triangulation have been installed in many automobiles to realize Advanced Driver Assistance System (ADAS) functions as devices measuring distances to subjects. Examples of such distance-measuring camera systems include stereo camera systems and image plane phase-difference camera systems.

A stereo camera system has two cameras arranged in parallel with each other while being separated by a predetermined gap, detects the amount of displacement caused by the parallax of a subject shown in images captured by respective cameras, and calculates a distance to the subject based on this amount of displacement.

An image plane phase-difference distance measurement camera system performs imaging using one camera that includes an imaging element called an image plane phase-difference element. Light passing through an imaging optical system is incident in a plurality of pixels formed on the image element described above, and a displacement caused by the parallax in a generated image signal is detected. A distance to the subject is calculated on the basis of this displacement.

There is a possibility that these distance-measuring camera systems incorrectly calculate distances to subjects under adverse weather conditions. More specifically, adverse weather conditions are situations in which particles of rain, fog, snow, or the like obstruct the visibility of a subject.

In the camera system described above, if the camera captures light that has been diffusely reflected by particles located in front of a subject, an image signal other than that of the subject may be generated, and there are cases in which a distance to the subject cannot be calculated with high accuracy due to the influence of the image signal described above.

On the other hand, there is an imaging technique that uses a camera called a range gate camera. This is a technique for clearly imaging only a subject present within a target distance range by emitting pulsed light to the side in front of the camera for a predetermined time and exposing only light reflected within the target distance range using an internal imaging element of the camera. Hereinafter, the technique described above is referred to as range gate control. By using this range gate control, a subject present at a predetermined distance can be clearly imaged, for example, even under adverse weather conditions.

Japanese Patent No. 6293134 proposes an imaging apparatus that is capable of performing imaging and distance measurement of a far place under adverse weather conditions by combining range gate control with a distance-measuring camera system.

SUMMARY

In a case in which range gate control is combined with a distance-measuring camera system, arithmetic operations used for imaging using the range gate control are also required in addition to an arithmetic operation of performing distance measurement in a distance-measuring camera, and thus there is a problem that the arithmetic operation processing amount of the entire system increases. For this reason, the scale of the arithmetic operation processing circuits required for the arithmetic operation processing becomes large, and the total power consumption of the system tends to increase.

The present disclosure is directed to provide an imaging apparatus capable of reducing power consumption of an imaging element.

The present disclosure in its first aspect provides an imaging apparatus as specified in claim 1. Optional features are specified in claims 2 to 8.

The present disclosure in its second aspect provides an imaging method as specified in claim 9.

The present disclosure in its third aspect provides a storage medium as specified in claim 10.

According to the present disclosure, an imaging apparatus capable of reducing the power consumption of an imaging element can be provided.

Features of the present disclosure will become apparent from the following description of embodiments with reference to the attached drawings. The following description of embodiments is described by way of example.

BRIEF DESCRIPTION OF THE DRAWINGS

Fig. 1 is a functional block diagram illustrating the configuration example of a camera 100, a light emitter 200, and a mobile body 300 according to a first embodiment.

Fig. 2A is a top view of a photoelectric conversion element 102 viewed in an incident direction of light, and Fig. 2B is a cross-sectional view of a pixel group 400 on cross-section I - I' in Fig. 2A.

Figs. 3A to 3D are diagrams illustrating a relation between a subject distance and incident light in an image plane phase different system.

Fig. 4 is a diagram illustrating an example of a relation between propagation of reflected light and an exposure timing in range gate control.

Fig. 5 is a diagram illustrating an example of light emission and an exposure (charge accumulation) control operation of one frame time in range gate control.

Fig. 6 is a diagram illustrating an example of a relation between a range and an imaging field of view at the time of imaging in range gate control according to the first embodiment.

Figs. 7A and 7B are diagrams illustrating an image range acquired at the time of imaging in range gate control according to the first embodiment.

Fig. 8 is a flowchart illustrating a process example of an imaging method according to the first embodiment.

Fig. 9 is a flowchart illustrating a process example of an imaging method according to a second embodiment.

DESCRIPTION OF THE EMBODIMENTS

Hereinafter, embodiments of the present disclosure are described with reference to the drawings. However, the present disclosure is not limited to the following embodiments. In the drawings, the same reference numerals are assigned to the same members or elements, and duplicate description is omitted or simplified.

<First Embodiment>

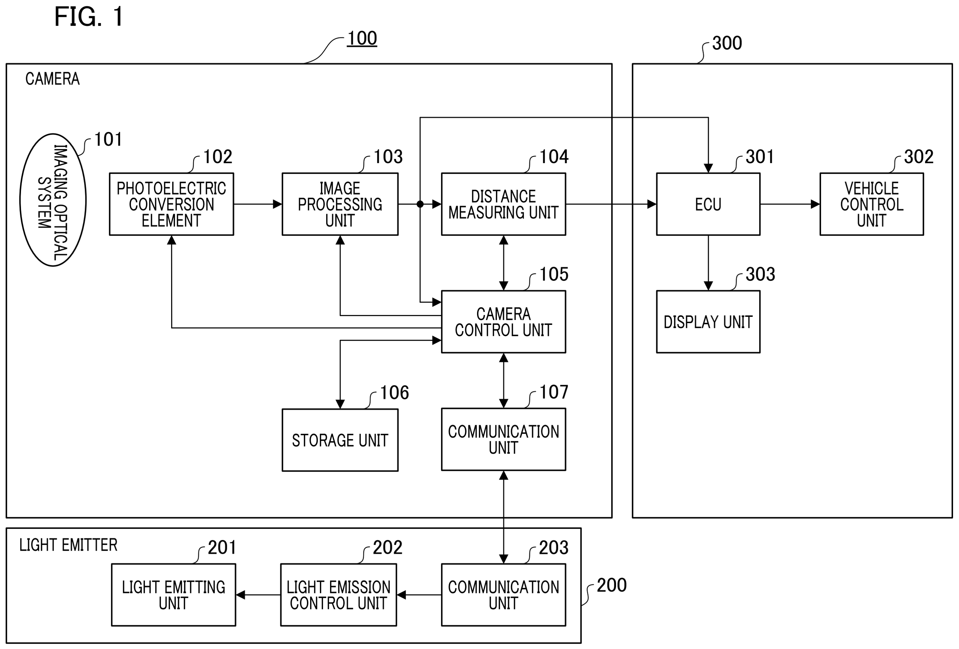

Fig. 1 is a functional block diagram illustrating the configuration example of a camera 100, a light emitter 200, and a mobile body 300 according to a first embodiment. The camera 100 functions as an imaging apparatus.

In this embodiment, for example, an example of a vehicle such as an automobile is used as the mobile body 300 in description. However, the mobile body may be any movable device such as a train, a ship, an airplane, a robot, a drone, an Automated Guided Vehicle (AGV), or an Autonomous Mobile Robot (AMR).

Some of the functional blocks illustrated in Fig. 1 are realized by causing computers, which are not illustrated, included in the camera 100, the light emitter 200, and the mobile body 300 to execute computer programs stored in a memory as a storage medium that is not illustrated.

However, such some or all thereof may be realized by hardware. As the hardware, a dedicated circuit (ASIC), a processor (a reconfigurable processor, a DSP), or the like can be used.

In addition, the functional blocks illustrated in Fig. 1 may not be built into the same casing and may be configured using another device connected through a signal channel.

The camera 100 has an imaging optical system 101, a photoelectric conversion element 102, an image processing unit 103, a distance measuring unit 104, a camera control unit 105, a storage unit 106, a communication unit 107, and the like. The photoelectric conversion element 102 functions as an imaging unit that generates an image signal by exposure with reflected light acquired by pulsed light striking a subject.

The imaging optical system 101 can form an image (optical image) of a subject on the photoelectric conversion element 102 and has an exit pupil located at a position away from the photoelectric conversion element 102 by a predetermined distance.

The photoelectric conversion element 102, for example, is a semiconductor image sensor element such as a complementary metal oxide semiconductor (CMOS) sensor. The photoelectric conversion element 102, for example, has a pixel region in which pixels having a photoelectric conversion function are two-dimensionally arranged.

The photoelectric conversion element 102 according to this embodiment uses an imaging element of the image plane phase-difference distance measuring system as a stereo camera system. In other words, each pixel region has one microlens and two photoelectric conversion parts and performs photoelectric conversion of subject images, which have parallax, formed on the photoelectric conversion element 102 to generate a first image signal and a second image signal.

In the photoelectric conversion element 102 of the image plane phase-difference system according to this embodiment, although each pixel region has one microlens and two photoelectric conversion parts, the configuration is not limited thereto and may have at least two photoelectric conversion parts. For example, the phase plane phase-difference system may be realized using a quad-pixel structure having one microlens and four photoelectric conversion parts.

In this way, the photoelectric conversion element 102 as an imaging unit generates a first image signal and a second image signal that have predetermined parallax. However, the stereo camera system is not limited thereto, and, for example, a stereo camera formed from two cameras having parallax may be used.

Although the imaging element of the imaging plane phase-difference system has two photoelectric conversion parts as described above, the configuration is not limited thereto, and the imaging element may have at least one photoelectric conversion part. For example, the image plane phase-difference system may be realized using a quad-pixel structure.

The image processing unit 103 performs image processing, for example, such as black level correction, gamma curve adjustment, noise reduction, digital gain adjustment, demosaic processing, and data compression on an image signal generated by the photoelectric conversion element 102, thereby generating a final image signal. The output of the image processing unit 103 is supplied to the distance measuring unit 104, the electric control unit (ECU) 301 of the mobile body 300, and the camera control unit 105.

The distance measuring unit 104 performs image recognition on the basis of the first image signal and the second image signal supplied from the image processing unit 103, thereby performing the process of recognizing objects such as surrounding persons, vehicles, and the like. In addition, a distance to an object is calculated on the basis of a phase shift between images according to parallax between the first image signal and the second image signal supplied from the image processing unit 103.

In other words, the distance measuring unit 104 calculates a distance value to a subject and a degree of reliability of the distance value on the basis of the first image signal and the second image signal. The image processing unit 103 and the distance measuring unit 104 function as an arithmetic operation processing unit that performs a predetermined arithmetic operation process (image processing, image recognition, distance measurement, and the like) on an image acquired from the image signals.

The camera control unit 105 has a CPU as a computer and a memory storing a computer program built thereinto and controls each unit of the camera 100 by the CPU executing a computer program stored in the memory.

In addition, the camera control unit 105 functions as a control unit and performs control of the length of an exposure period (charge accumulation time) of each frame, the timing of control signals, and the like by transmitting a reference signal that is repeatedly output to the camera 100 with predetermined intervals.

Exposure in the following description represents charge accumulation, photoelectric conversion, or operations from the start to the end of imaging in the photoelectric conversion element 102. In this embodiment, charge accumulation, photoelectric conversion, and imaging are used as the same meaning, and, for example, in a case in which the photoelectric conversion element 102 is an APD, the operation of charge accumulation, photoelectric conversion, and imaging includes an operation of counting photoelectrically-converted signals using a counter 211 circuit.

In accordance with the camera control unit 105 setting a predetermined value to a light emission control unit 202 through the communication unit 107 and the communication unit 203, a pulse signal is output to the light emitting unit 201 at a predetermined timing synchronized with a reference signal, whereby the light emission period of the light emitter 200 is controlled.

The reference signal synchronized with the reference signal transmitted to the photoelectric conversion element 102 in this way is transmitted also to the light emitter 200, and the light emitter 200 executes light emission control in synchronization with the reference signal. In accordance with this, the exposure timing of the photoelectric conversion element 102 and the light emission timing according to the light emitter 200 can be synchronized with each other.

Here, the camera control unit 105 functions as a control unit executing a control step of controlling the light emission timing of the light emitting unit and the exposure (charge accumulation) timing of the imaging unit such that reflected light of pulsed light from a subject present in a predetermined distance range is exposed (charge being accumulated) by the imaging unit.

The storage unit 106, for example, includes a recording medium such as a memory card or a hard disk and can store and read an image signal. The communication unit 107 includes a wireless or wired interface, outputs a generated image signal to the outside of the camera 100, and receives various signals from the outside.

In addition, the communication unit 107 according to this embodiment is connected to the communication unit 203 of the light emitter 200 and is also responsible for the role of transmitting the reference signal described above and transmitting a control command from the camera control unit 105 to the light emitter 200.

The light emitter 200 has a light emitting unit 201 that emits pulsed light, a light emission control unit 202, and a communication unit 203. The light emitting unit 201, for example, is a near infrared LED that is arranged in front of the mobile body 300 and is configured in combination with a lens.

The wavelength of the pulsed light emitted by the light emitting unit 201 is not limited to the near-infrared region and, for example, may be the visible light region. In addition, the light emitting unit 201 may change the light emission intensity of, for example, a headlight as the light emitter included in the mobile body 300. Furthermore, the light emitting unit 201 outputs pulsed light within a predetermined light emission time according to the pulsed signal output to the light emission control unit 202.

The light emission control unit 202 receives a reference signal transmitted by the camera control unit 105 of the camera 100 through the communication unit 203, generates a pulse signal at a predetermined timing with reference to the reference signal, and outputs the generated pulse signal to the light emitting unit 201.

Here, the light emission control unit 202 can set a period from the reference signal to the output of the pulse, a pulse output width, a pulse non-output width, a repetition period and a repetition count from the output of one pulse to the output of a next pulse, and the like.

In accordance with the camera control unit 105 setting a predetermined value in the light emission control unit 202 via the communication units 107 and 203, a pulse signal is output to the light emitting unit 201 at a predetermined timing with reference to the reference signal, thereby controlling the light emission period of the light emitter 200. In this way, the light emission control unit 202 performs light emission control with reference to the same signal as the reference signal that has been input to the camera 100.

The communication unit 203 communicates with the communication unit 107 of the camera 100, receives setting information and a reference signal from the camera control unit 105 to the light emission control unit 202, and transmits them to the light emission control unit 202.

The ECU 301 has a CPU as a computer and a memory that stores a computer program built thereinto and controls each unit of the vehicle control unit 302 by the CPU executing the computer program stored in the memory.

The output of the distance measuring unit 104 is supplied to the camera control unit 105 and is supplied to the vehicle control unit 302 and the display unit 303 through the ECU 301. The vehicle control unit 302 functions as a movement control unit that performs driving, stopping, and direction control of a vehicle as a mobile body on the basis of the output of the ECU 301. The display unit 303 functions as a display unit, includes a display element, for example, such as a liquid crystal device or an organic EL device, and is mounted in the mobile body 300.

In this embodiment, the ECU 301 receives information of a distance measurement result from the distance measuring unit 104 and can execute vehicle stop control (automatic braking or the like) in accordance with details of the distance measurement result. In addition, the ECU 301 receives distance measurement processing data from the distance measuring unit 104 and transmits it to the display unit 303.

The display unit 303, on the basis of the output of the ECU 301, displays various types of information relating to an image generated by the photoelectric conversion element 102, distance measurement results acquired by the distance measuring unit 104, and the traveling state of the vehicle, and the like to a driver of the mobile body 300, for example, using a GUI.

The image processing unit 103, the distance measuring unit 104, and the like illustrated in Fig. 1 may not be mounted on the mobile body 300 and, for example, may be provided in an external terminal or the like that is installed separately from the mobile body 300 for the purpose of remotely controlling the mobile body 300 or monitoring the traveling of the mobile body.

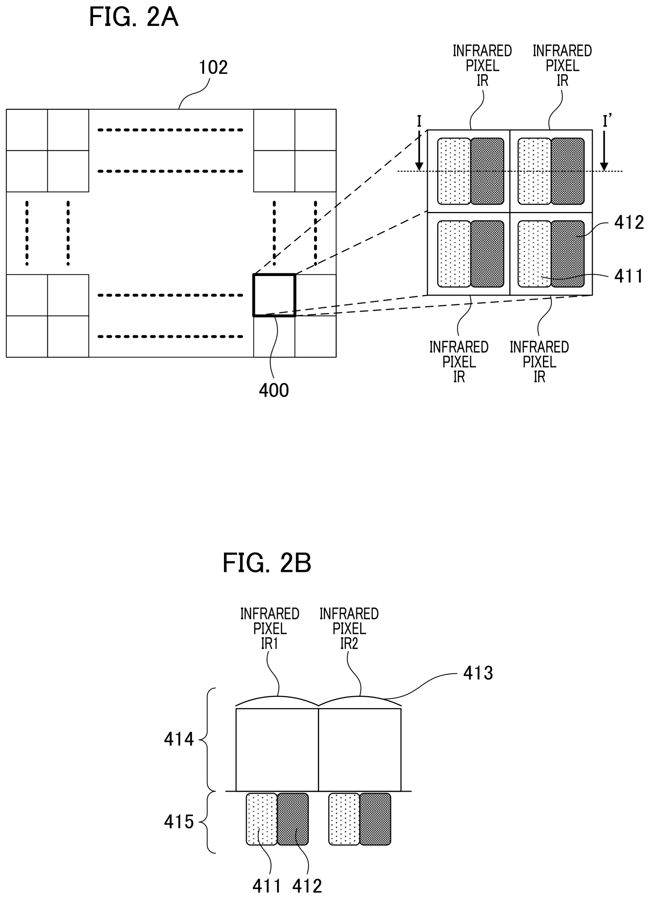

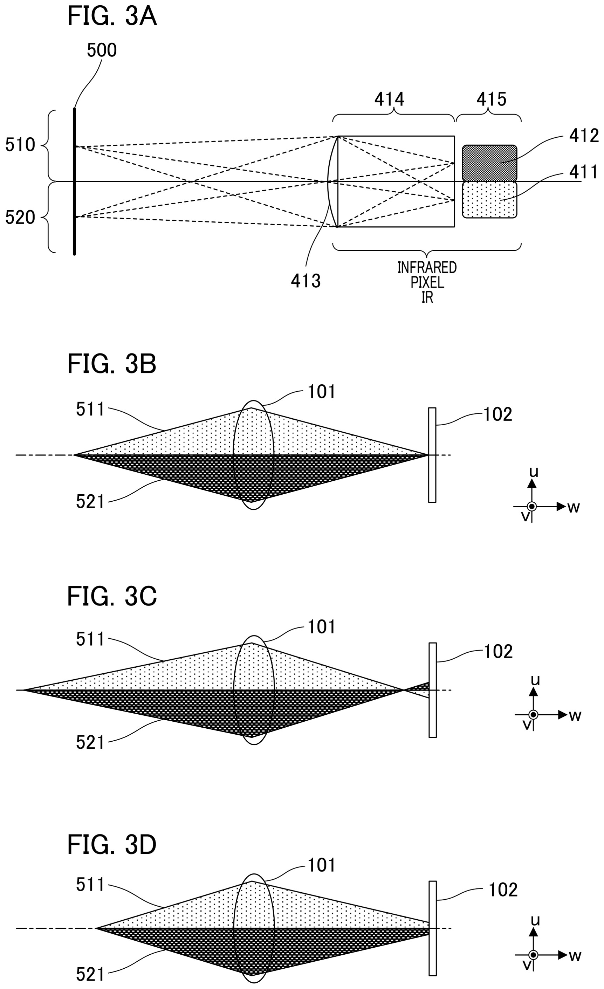

Here, the principle of distance measurement based on the imaging plane phase-difference system using the photoelectric conversion element 102 is described with reference to Figs. 2A and 3D. Fig. 2A is a top view of the photoelectric conversion element 102 seen in the incident direction of light, and Fig. 2B is a cross-sectional view taken along I - I' illustrated in Fig. 2A.

As illustrated in Fig. 2A, the photoelectric conversion element 102 is formed by arranging a plurality of pixel groups 400, each consisting of 2 rows × 2 columns of pixels, in a matrix. Each pixel group 400 has four infrared pixels IR that detect IR light. Each pixel has a first photoelectric conversion part 411 and a second photoelectric conversion part 412. The arrangement of pixels in the pixel group 400 is not limited to this and may be changed depending on the wavelength band of light emitted from the light emitter 200.

In other words, the pixel group 400 may have, for example, an infrared pixel IR that detects IR light, a red pixel that detects red light, a green pixel that detects green light, and a blue pixel that detects blue light. Alternatively, the pixel group 400 may have two green pixels that detect green light, one red pixel that detects red light, and one blue pixel that detects blue light. In the case of the pixel arrangement described above, the two green pixels are arranged diagonally.

Fig. 2B is a cross-sectional view of the pixel group 400 taken along cross-section I - I' in Fig. 2A as described above. Each pixel is composed of a light guiding layer 414, which includes a microlens 413, and a light receiving layer 415.

The light guiding layer 414 is formed from the microlens 413 used for efficiently guiding light incident on the pixel to the light receiving layer 415, a color filter that transmits light of a wavelength band to be detected by each pixel, and a light guiding member that has wirings for pixel reading and pixel driving. The light receiving layer 415 photoelectrically converts light incident through the light guiding layer 414 and outputs resultant electrical signals. The light receiving layer 415 has a first photoelectric conversion part 411 and a second photoelectric conversion part 412.

Figs. 3A and 3D are diagrams for describing the relation between a subject distance and incident light in the imaging plane phase-difference system. Fig. 3A is a schematic diagram illustrating the exit pupil 500 of the imaging optical system 101 and light incident on the first photoelectric conversion part 411 and the second photoelectric conversion part 412 of the infrared pixel IR of the photoelectric conversion element 102. Although the photoelectric conversion element 102 has a plurality of pixels, for simplicity, one infrared pixel IR is described.

The microlens 413 of the infrared pixel IR is arranged such that the exit pupil 500 and the light receiving layer 415 have an optically conjugate relation. As a result, light passing through a first pupil region 510, which is a partial pupil area included in the exit pupil 500, is incident in the first photoelectric conversion part 411, and light passing through a second pupil region 520 is incident in the second photoelectric conversion part 412.

The first photoelectric conversion part 411 of each pixel photoelectrically converts received light and outputs a resultant electrical signal. From signals output from a plurality of first photoelectric conversion parts 411 included in the photoelectric conversion element 102, a first image signal is generated. The first image signal represents an intensity distribution of a first image formed on the photoelectric conversion element 102 by light that mainly passes through the first pupil region 510.

The second photoelectric conversion part 412 of each pixel photoelectrically converts received light and outputs a resultant signal. From signals output from a plurality of second photoelectric conversion parts 412 included in the photoelectric conversion element 102, a second image signal is generated. The second image signal represents an intensity distribution of a second image formed on the photoelectric conversion element 102 by light that mainly passes through the second pupil region 520.

A relative positional displacement amount between the first image signal and the second image signal (hereinafter referred to as a "parallax amount") is an amount corresponding to a defocus amount. A relation between the parallax amount and the defocus amount is described with reference to Figs. 3B and 3D.

Figs. 3B, 3C, and 3D are schematic diagrams illustrating the photoelectric conversion element 102 and the imaging optical system 101. In the drawings, first light 511 that passes through the first pupil region 510 and second light 521 that passes through the second pupil region 520 are illustrated.

Fig. 3B illustrates an in-focus state, in which the first light 511 and the second light 521 converge on the photoelectric conversion element 102. At this time, the parallax amount between the first image signal formed by the first light 511 and the second image signal formed by the second light 521 is zero.

Fig. 3C illustrates a state of being defocused in a negative direction of the w axis on the image side. At this time, the parallax amount between the first image signal formed by the first light 511 and the second image signal formed by the second light 521 is not zero and has a negative value.

Fig. 3D illustrates a state of being defocused in a positive direction of the w axis on the image side. At this time, the parallax amount between the first image signal formed by the first light 511 and the second image signal formed by the second light 521 is not zero and has a positive value.

From comparison between Figs. 3C and 3D, it can be understood that the direction in which the parallax occurs is reversed depending on the positivity/negativity of the defocus amount. It can also be understood from the geometric relation that the parallax amount corresponding to the defocus amount is generated.

Accordingly, the parallax amount between the first image signal and the second image signal can be detected using a region-based matching method, for example, a block matching method, and be converted into a defocus amount. Here, the block matching method is a method in which, with a selected area of one image, an area having high similarity (hereinafter referred to as a parallax matching area) from the other image is collated, and a positional deviation from the area having the high similarity is set as the parallax.

Furthermore, by using the imaging equation of the imaging optical system 101, the defocus amount on the image side can be converted into a distance to the object. The imaging equation of the imaging optical system 101 is a relational equation represented in the following Equation (1), where f is the focal distance of the photoelectric conversion element 102, Ipp is a distance from the image-side principal point to the photoelectric conversion element 102, ΔL is the defocus amount, and D is a distance to the object.

$$D = \frac{1}{\left\{ \dfrac{1}{f} - 1 \left/ (Ipp + \Delta L) \right. \right\}}$$

$$\dots \text{(Equation 1)}$$

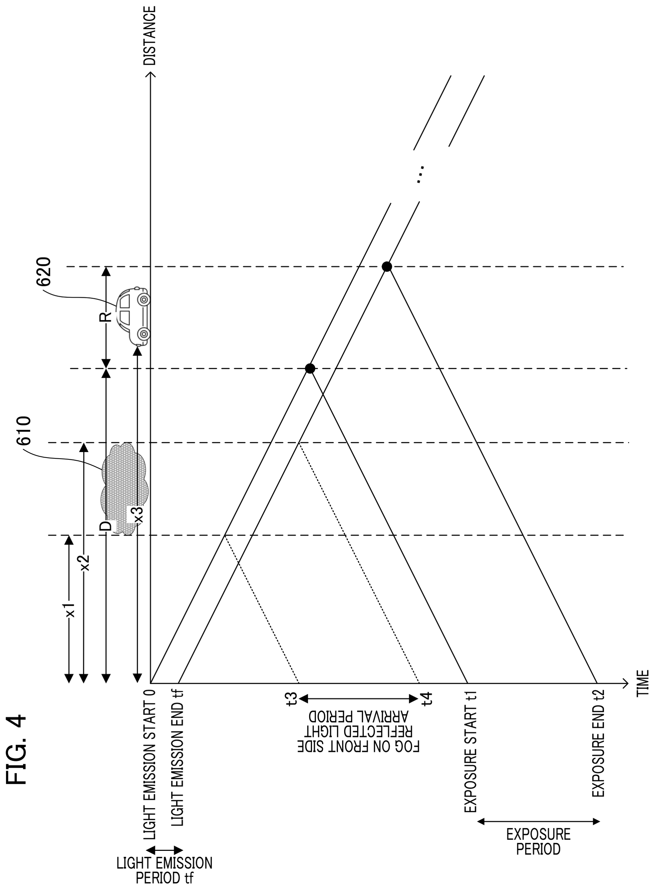

Next, Fig. 4 is a diagram illustrating an example of the relation between the propagation of reflected light and the exposure timing in range gate control and illustrates the relation among emitted light from the light emitter 200, the propagation of reflected light thereof, and the exposure timing of the camera 100. In Fig. 4, the horizontal axis represents the distance, and the vertical axis represents the time.

In Fig. 4, a method for acquiring an image acquired by imaging a target distance (a range gate image) by performing control that synchronizes the light emission timing and the exposure timing in accordance with a target distance (range gate control) is described. A camera that acquires a target distance image through range gate control in this way is referred to as a range gate camera.

First, the horizontal axis is described. Fog 610 is present between distance x1 and distance x2, and vehicle 620 is present at distance x3. In Fig. 4, in range gate control, the position of the camera 100 is set as a starting point, and a range gate image in the range of a predetermined distance therefrom is acquired.

In this case, a target distance range R becomes a target distance range desired to be imaged. At this time, the vehicle 620 is present within the target distance range R. A subject image within the target distance range R is photoelectrically converted by the photoelectric conversion element 102 and is maintained as electric charge in each pixel.

Next, the vertical axis is described. Time 0 is set as a light emission start timing of the light emitter 200, and time tf is set as a light emission end timing. At this time, the light emission period is tf. The position of the camera 100 is set as a start point, an exposure start time (charge accumulation start time) of a case in which a range gate image in the range of the target distance range R therefrom is denoted as time t1, and an exposure end time (charge accumulation end time) is denoted as time t2.

Time t1 is a timing at which emission light emitted from the light emitter 200 at time 0 returns to the camera 100 as reflected light from the vehicle 620. Similarly, t2 is a timing at which emission light emitted from the light emitter 200 returns to the camera 100 as reflected light from a place advanced from the distance D by the target distance range R.

Furthermore, a timing at which initial reflected light returns to the camera 100 is denoted as time t3, and a timing at which the last reflected light according to fog 610 returns to the camera 100 is denoted as time t4.

In range gate control, exposure (charge accumulation) is not performed in a period from time t3 at which the reflected light from fog 610 reaches the camera 100 to time t4, and exposure (charge accumulation) is performed only in a period from time t1 at which reflective light corresponding to the target distance range R from the distance D reaches to time t2. In accordance with this, the image of the vehicle 620 can be clearly acquired while removing fog 610.

Here, the time it takes for reflected light from a target object present at distance x to return to the camera 100 is described. A timing at which the emission light, which has been started to be emitted at time 0, strikes a target object present at distance x and returns to the imaging unit as reflected light is denoted as time tr.

At this time, a relation between the timing time tr at which the reflected light returns and the distance x to the imaging target object is represented in the following Equation 2.

$$\text{time tr} = 2x/\text{speed of light c (approximately } 3 \times 10^8 \text{ m/s)} \qquad \text{(Equation 2)}$$

As illustrated in Fig. 4, when the target distance range R from distance D is set as an imaging range, the time t1 of the exposure (charge accumulation) timing at the start point of the target distance range R can be acquired as in the following Equation 3 by substituting the distance D into the distance x in Equation (2) represented above.

$$\text{time t1} = 2D/\text{speed of light c} \qquad \text{(Equation 3)}$$

In addition, the time t2 of the exposure (charge accumulation) timing of the end point of the target distance range R can be acquired as in the following Equation 4 by substituting distance D + R into distance x in Equation 2 represented above and adding the time tf thereto.

$$t2 = tf + 2(D+R)/\text{speed of light c} \qquad \text{(Equation 4)}.$$

In this way, by controlling the time tr from light emission to exposure (charge accumulation) in correspondence with a distance x (target distance) desired to be imaged, range gate control capable of clearly imaging a subject present at a target distance even when there is fog or the like between the camera and the target distance is realized.

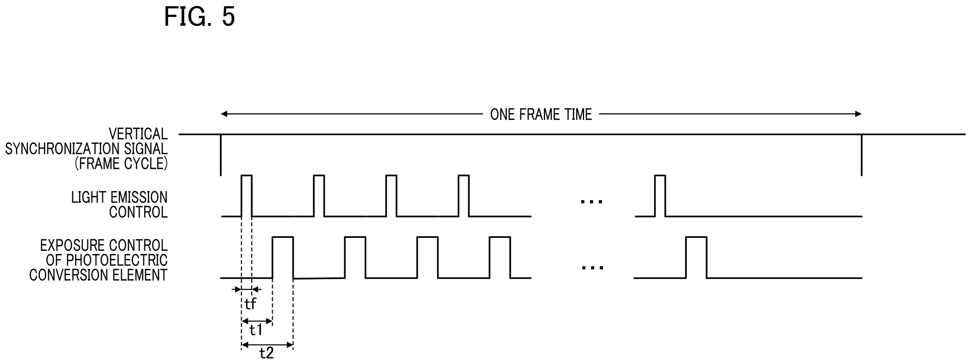

Fig. 5 is a diagram illustrating an example of light emission and exposure (charge accumulation) control operations in one frame time in range gate control and illustrates a control operation for acquiring a range gate image per frame time.

In Fig. 5, the vertical synchronization signal represents a frame period of imaging, and a period from a low pulse to a next low pulse is one frame time. The light emission control represents the light emission timing of the light emitting unit 201, the exposure (charge accumulation) control of the photoelectric conversion element represents the length of the exposure (charge accumulation) period for each frame of the photoelectric conversion element 102 and the timings of control signals output by the camera control unit 105.

In the range gate control, the light emission period is controlled in a pulse shape by the camera control unit 105, and the exposure (charge accumulation) of the photoelectric conversion element 102 is performed only for reflected light for light from a specific target distance range R.

Here, a light emission period from the start to the end of light emission is denoted as tf, a time from the start of light emission to the start of exposure (charge accumulation) is denoted as t1, and a time from the start of light emission to the end of exposure (charge accumulation) is denoted as t2. In that case, t1 represents a period in which, after light emission starts, light reaches a specific target distance range R, and reflected light returns to the camera 100, and a time from t1 to t2 is a period in which reflected light of the specific target distance range R is exposed.

In order to correctly perform range gate control, it is necessary to synchronize the timings of the start of light emission and the start of exposure in accordance with a predetermined target distance range. In this embodiment, synchronization is achieved by the camera control unit 105 transmitting the same reference signal to the photoelectric conversion element 102 and the light emission control unit 202.

As illustrated in the light emission control in a timing chart illustrated in Fig. 5, a period from the start of light emission to the start of the next light emission forms a range gate operation cycle. In one range gate operation cycle, light received by the photoelectric conversion element 102 is converted into electric charge, and the electric charge is maintained within the photoelectric conversion element 102.

In this state, a next range gate operation cycle is executed, and light that has been newly received by the photoelectric conversion element 102 is converted into electric charge, and the electric charge is added to the charge that has been maintained within the photoelectric conversion element 102. An interval from light emission to the next light emission is set using a time until the reflected light sufficiently attenuates and does not return to the camera 100 as a reference.

As illustrated in Fig. 5, within one frame time, the range gate operation cycle is performed a predetermined number of multiple times that has been set, and electric charge that has been finally added and maintained within one frame time is transferred to the memory inside of the photoelectric conversion element 102, and electric charge that has been added and maintained is reset.

In this embodiment, since the exposure (charge accumulation) period is synchronized with the light emission from the light emitter 200, it is possible to acquire a clear image for a targeted distance range even under adverse weather conditions such as fog.

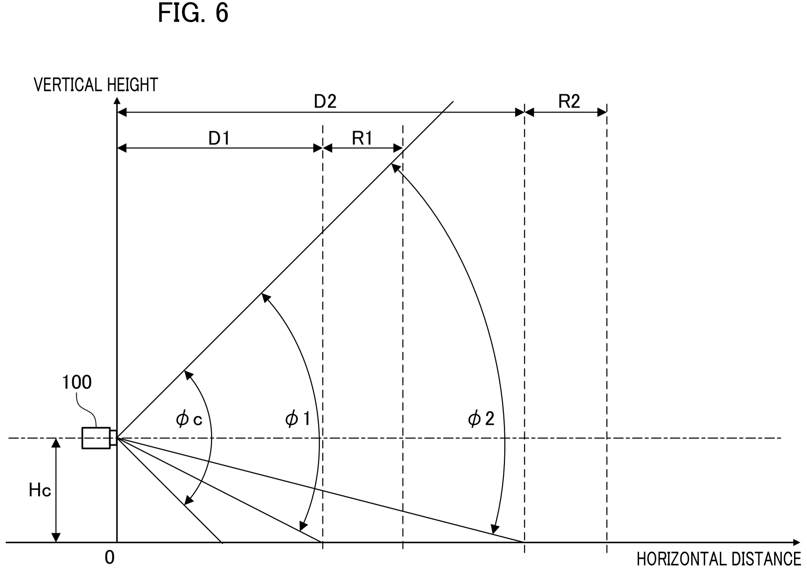

Next, a method of calculating a pixel range (operating area) for performing a predetermined operation in the photoelectric conversion element 102 at the time of imaging in the range gate control is described with reference to Figs. 6, 7A, 7B, and 8.

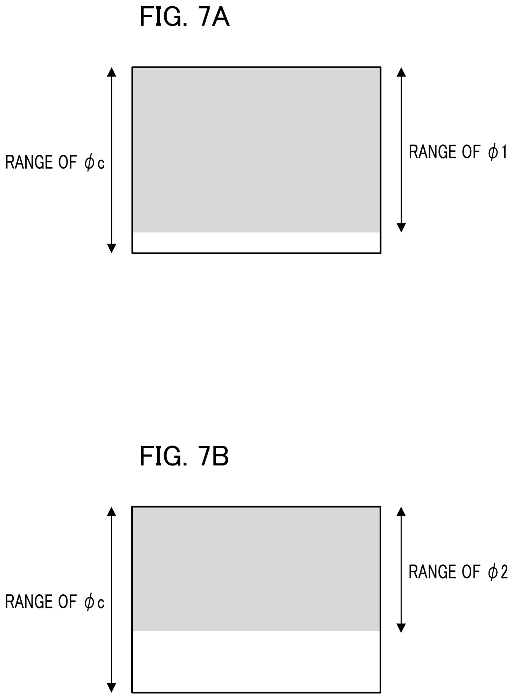

Fig. 6 is a diagram illustrating an example of the relation between the range at the time of imaging and the field of view in the range gate control according to the first embodiment. The horizontal axis represents a horizontal distance from the camera 100, and the vertical axis represents a vertical height from the ground surface. Figs. 7A and 7B are diagrams illustrating image ranges acquired at the time of imaging in the range gate control according to the first embodiment.

The orientation and the position of the camera 100 are arranged such that the optical axis of the imaging optical system 101 is in parallel with the horizontal direction, and a vertical height from the ground surface is Hc. $\varphi c$ is the vertical field of view of the camera 100 and has a field of view that is symmetrical with respect to the optical axis of the imaging optical system 101.

$\varphi 1$ is the range of the field of view that can be imaged when imaging distance D1 and range R1 in the range gate control, and the range of $\varphi 1$ is given by the following Equation 5.

$$\varphi 1 = \mathrm{atan}(Hc/D1) \; + \varphi c/2 \quad (\text{Equation 5})$$

At this time, the range of reflected light incident in the pixel region of the photoelectric conversion element 102 through the imaging optical system 101, as illustrated in Fig. 7A, is a pixel range corresponding to $\varphi 1$ at which a vertical lower side is narrower with respect to a vertical range of the pixel range corresponding to $\varphi c$.

An upward direction in Figs. 7A and 7B represents an upward direction of a subject, that is, a vertical height direction and represents a downward direction on the light receiving surface of the photoelectric conversion element 102. The reason for this is that the subject image is formed upside down on the light receiving surface of the photoelectric conversion element 102 in accordance with the imaging optical system 101.

$\varphi 2$ is the range of the field of view that can be imaged when imaging distance D2 and range R2 in the range gate control, and the range of $\varphi 2$ is given by the following Equation 6.

$$\varphi 2 = \mathrm{atan}(Hc/D2) \; + \; \varphi c/2 \quad (\text{Equation 6})$$

At this time, the range of reflected light incident in the pixel region of the photoelectric conversion element 102 through the imaging optical system 101, as illustrated in Fig. 7B, is a pixel range corresponding to $\varphi 2$ at which a vertical lower side is narrower with respect to a vertical range of the pixel range corresponding to $\varphi c$.

Since D2 > D1, from Equations 5 and 6, $\varphi 2 < \varphi 1$. Thus, the pixel range (operating area) of the photoelectric conversion element 102 in which predetermined operations such as photoelectric conversion and reading are to be performed in the imaging unit is narrower at the time of distance D2, which is a farther place, than at the time of the distance D1.

Thus, in this embodiment, the operating area (pixel range) used for performing a predetermined operation in the imaging unit is determined on the basis of the distance of the subject on a side closer to the imaging unit in a predetermined distance range. In other words, in the predetermined distance range, the greater the distance of the subject on the side closer to the imaging unit, a smaller range the operating area (pixel range) used for performing a predetermined operation in the imaging unit becomes.

In addition, the greater the distance of the subject on the side closer to the imaging unit in the predetermined distance range, a smaller range in the vertical direction of the operating area the range of the operating area (pixel range) used for performing a predetermined operation in the imaging unit becomes.

Furthermore, the greater the distance of the subject on the side closer to the imaging unit in the predetermined distance range, an upper side range of the subject in the image the operating area (pixel range) used for performing a predetermined operation in the imaging unit becomes. Here, the upper range of the subject in the image, as illustrated in Fig. 7B, represents a range toward the upper side of the subject in the image.

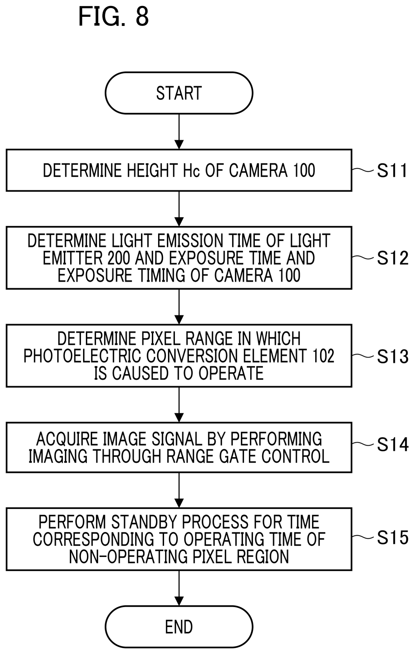

Fig. 8 is a flowchart illustrating a process example of an imaging method according to the first embodiment. In accordance with a CPU or the like as a computer inside of the camera control unit 105 executing a computer program stored in a memory, operations of steps of the flowchart illustrated in Fig. 8 are sequentially performed.

In Fig. 8, for example, the processing flow of Fig. 8 is repeatedly executed at a predetermined frame period. In other words, regardless of the size of the operating area, the imaging unit is driven at a predetermined period. Hereinafter, although a case in which distance D1 and range R1 are imaged is described, a similar process flow is applied also to a case in which distance D2 and range R2 are imaged.

First, in Step S11, the camera control unit 105 determines a vertical height Hc of the camera 100 from the ground surface. Here, as the vertical height Hc, a vertical height of the camera 100 from the ground surface acquired when the camera 100 is mounted on the mobile body 300 stopping on the ground surface is used. A value that has been recorded in the storage unit 106 in advance as a specified value is read and used as this value. Alternatively, the height Ho of the subject may be estimated on the basis of an image recognition result of the field of the previous time.

Next, in Step S12, the camera control unit 105 determines a light emission time of the light emitter 200, an exposure (charge accumulation) time of the camera 100, and an exposure (charge accumulation) timing for imaging distance D1 and range R1 in the range gate control. In other words, in Step S12, the light emission timing of the light emitting unit and the exposure timing of the imaging unit are controlled such that the imaging unit exposes the reflected light from the subject present within a predetermined distance range from the imaging unit.

Next, in Step S13, the camera control unit 105 determines the operating area (pixel range) used for performing a predetermined operation among all the pixels of the photoelectric conversion element 102. Here, the range $\varphi 1$ in which distance D1 and range R1 can be imaged in the range gate control is calculated using Equation 5 described above, and the range corresponding to $\varphi 1$ is used as the operating area (pixel range).

In other words, in Step S13, on the basis of a predetermined distance range, an operating area used for performing a predetermined operation in the imaging unit is changed. Here, Step S12, Step S13, and the like function as control steps.

The predetermined operation includes at least one of operations such as charge accumulation, photoelectric conversion, A/D (analogue/digital) conversion, avalanche multiplication, noise removal, dark current removal, and reading in the photoelectric conversion element 102. In this embodiment, on the basis of a predetermined distance range, the operating area (pixel range) used for performing the predetermined operation described above in the imaging unit is changed.

Next, in Step S14, the camera control unit 105 performs predetermined operations such as photoelectric conversion and reading in the range gate control using the light emission time, the exposure time, and the exposure timing determined in Step S12 and the operating area (pixel range) determined in Step S13. In other words, in the range gate control, the light emitter 200 and the photoelectric conversion element 102 are operated. In accordance with this, an image signal is captured by the photoelectric conversion element 102 and input to the image processing unit 103.

Next, in Step S15, the camera control unit 105 performs a standby process until the start of the next imaging for a time corresponding to the operating time of a pixel region that is not operated among a plurality of pixels of the photoelectric conversion element 102.

In accordance with this, in a case in which imaging is performed a plurality of times at predetermined time intervals, an average value of pixel ranges (operating areas) used for performing a predetermined operation can be reduced in the photoelectric conversion element 102 per unit time. In other words, the power consumption of the photoelectric conversion element 102 can be reduced.

In this way, in this embodiment, by differently setting the operating area (pixel range) used for performing a predetermined operation in the imaging unit in correspondence with a distance D of range gate imaging, the power consumption of the photoelectric conversion element 102 can be reduced. In addition, since the signal amount of image signals output from the photoelectric conversion element 102 is reduced, the power consumption of the image processing unit 103 and the distance measuring unit 104 that receive image signals and perform arithmetic operation processes can be reduced.

<Second Embodiment>

Hereinafter, a second embodiment of the present disclosure is described. Description of parts similar to those of the first embodiment is omitted.

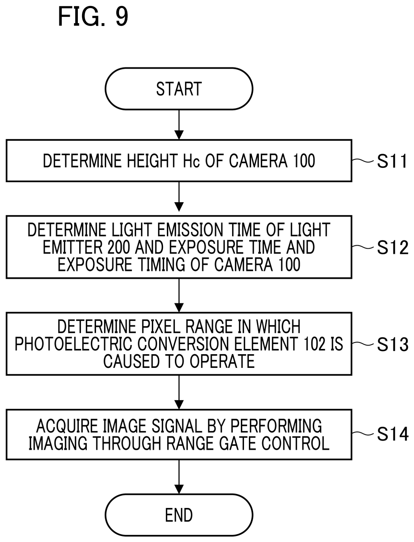

Fig. 9 is a flowchart illustrating a process example of an imaging method according to a second embodiment. In accordance with a CPU or the like as a computer inside of the camera control unit 105 executing a computer program stored in a memory, operations of steps of the flowchart illustrated in Fig. 9 are sequentially performed.

Although Steps S11 to S14 are similar to the first embodiment, in this example, Step S15 of the first embodiment is not performed, after Step S14 ends, the process returns to Step S11 again, and the processing flow illustrated in Fig. 9 is repeated. In other words, in this embodiment, an imaging unit is driven at a cycle corresponding to the size of the operating area.

In accordance with this, in a case in which imaging is performed a plurality of times, it becomes possible to start the next imaging as soon as the predetermined operation in the above-described operating area (pixel range) of the photoelectric conversion element 102 ends, and the frame rate of imaging using the camera 100 can be improved.

For example, the orientation of the camera 100 may have an angle instead of being in parallel with respect to the horizontal direction, and, as the vertical height Hc, a height not at the time of stopping of the mobile body 300 but at the time of movement thereof may be measured in real time.

In other words, variations in the orientation of the mobile body 300 may be measured in real time using an orientation sensor or the like, and the orientation and the height of the camera 100 may be corrected on the basis thereof. Furthermore, the vertical field of view of the camera 100 may be asymmetrical with respect to the optical axis.

In addition, through range gate control, the operating area (pixel range) used for performing a predetermined operation in the imaging unit may be a plurality of distances and a plurality of ranges. Even in such a case, according to consideration similar to that described above, the imaging field of view may be calculated by taking into account the orientation of the camera 100, the vertical field of view, the operating area (pixel range) according to range gate control, and the like.

In addition, the operating area (pixel range) used for performing a predetermined operation in the photoelectric conversion element 102 is not limited to the determination method described above and, for example, may be selected in accordance with the imaging distance in the range gate control from among a plurality of predetermined operating areas (pixel ranges).

In the embodiments described above, the operating area (pixel range) used for performing a predetermined operation (for example, photoelectric conversion and a reading operation) in the photoelectric conversion element 102 is determined to be changed on the basis of a predetermined distance range. However, at that time, the size of the arithmetic operation processing range used for performing an arithmetic operation process within the read pixel range may be configured to be further smaller than the pixel range described above.

<Other Embodiments>

While the present disclosure has been described with reference to embodiments, it is to be understood that the disclosure is not limited to the disclosed embodiments, and various modifications and combinations of the embodiments described above on the basis of the gist of the present disclosure, and those are not intended to be excluded from the scope of the present disclosure. Furthermore, some of the embodiments described above may be appropriately combined.

In addition, the present disclosure includes implementation of the functions of the embodiments described above, for example, using a processor such as at least one CPU, a memory, and circuits (for example, ASIC). Furthermore, distributed processing may be performed using a plurality of processors.

In order to realize a part of or the whole control in the embodiments described above, a computer program realizing the functions of the embodiments described above may be supplied to a distance measuring camera system and the like through a network or various storage media.

Then, a computer (or a CPU, an MPU, or the like) in the distance measuring camera system and the like may be configured to read and execute the program. In that case, the program and a storage medium storing this program thereon constitute the present disclosure.

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD) TM), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

This application claims the benefit of Japanese Patent Application No. 2025-008965, filed January 22, 2025, which is hereby incorporated by reference herein in its entirety.

**Claims**

1.  An imaging apparatus (100, 200) comprising:

    a light emitting unit (201) configured to emit pulsed light;
    an imaging unit (102) configured to generate an image signal by exposure with reflected light acquired by causing the pulsed light to strike a subject and be reflected; and
    a control unit (105) configured to control a light emission timing of the light emitting unit (201) and an exposure timing of the imaging unit (102) such that the reflected light from the subject within a predetermined distance range from the imaging unit (102) is exposed by the imaging unit (102),
    wherein the control unit (105) changes an operating area for performing a predetermined operation in the imaging unit (102) on the basis of the predetermined distance range.

2.  The imaging apparatus (100, 200) according to claim 1, wherein the predetermined operation includes at least one of charge accumulation, photoelectric conversion, A/D conversion, avalanche multiplication, noise removal, dark current removal, and reading in the imaging unit (102).

3.  The imaging apparatus (100, 200) according to claim 1 or 2, wherein the control unit (105) determines the operating area on the basis of a distance to a subject on a side closer to the imaging unit (102) within the predetermined distance range.

4.  The imaging apparatus (100, 200) according to claim 3, wherein the control unit (105) sets the operating area in a smaller range as the distance to the subject on the side closer to the imaging unit (102) within the predetermined distance range becomes greater.

5.  The imaging apparatus (100, 200) according to claim 4, wherein the control unit (105) sets the operating area as a smaller range in a vertical direction of the operating area as the distance to the subject on the side closer to the imaging unit (102) within the predetermined distance range becomes greater.

6.  The imaging apparatus (100, 200) according to claim 5, wherein the control unit (105) sets the operating area in a range of an upper side of the subject in an image as the distance to the subject on the side closer to the imaging unit (102) within the predetermined distance range becomes greater.

7.  The imaging apparatus (100, 200) according to any one of claims 1 to 6, wherein the control unit (105) drives the imaging unit (102) at predetermined intervals regardless of a size of the operating area.

8.  The imaging apparatus (100, 200) according to any one of claims 1 to 6, wherein the control unit (105) drives the imaging unit (102) at a period corresponding to a size of the operating area.

9.  An imaging method controlling a light emitting unit (201) configured to emit pulsed light and an imaging unit (102) configured to generate an image signal by exposure with reflected light acquired by causing the pulsed light to strike a subject and be reflected, the imaging method comprising:

    controlling a light emission timing of the light emitting unit (201) and an exposure timing of the imaging unit (102) such that the reflected light from the subject within a predetermined distance range from the imaging unit (102) is exposed by the imaging unit (102); and

changing an operating area for performing a predetermined operation in the imaging unit (102) on the basis of the predetermined distance range.

10. A non-transitory storage medium storing a program of an imaging apparatus (100, 200) having a light emitting unit (201) configured to emit pulsed light and an imaging unit (102) configured to generate an image signal by exposure with reflected light acquired by causing the pulsed light to strike a subject and be reflected, causing a computer to perform each step of a control method controlling each unit of the imaging apparatus, the method comprising:

controlling a light emission timing of the light emitting unit (201) and an exposure timing of the imaging unit (102) such that the reflected light from the subject within a predetermined distance range from the imaging unit (102) is exposed by the imaging unit (102); and

changing an operating area for performing a predetermined operation in the imaging unit (102) on the basis of the predetermined distance range.

## FIG. 1

EP 4 782 877 A1

## FIG. 2A

## FIG. 2B

## FIG. 3A

## FIG. 3B

## FIG. 3C

## FIG. 3D

FIG. 4

EP 4 782 877 A1

FIG. 5

FIG. 6

## FIG. 7A

RANGE OF $\phi_c$

RANGE OF $\phi_1$

## FIG. 7B

RANGE OF $\phi_c$

RANGE OF $\phi_2$

# FIG. 8

```
          ┌─────────────┐
          │    START    │
          └──────┬──────┘
                 │
                 ▼
┌────────────────────────────────────┐
│  DETERMINE HEIGHT Hc OF CAMERA 100  │─── S11
└────────────────┬───────────────────┘
                 │
                 ▼
┌────────────────────────────────────┐
│  DETERMINE LIGHT EMISSION TIME OF   │
│  LIGHT EMITTER 200 AND EXPOSURE     │─── S12
│  TIME AND EXPOSURE TIMING OF        │
│  CAMERA 100                         │
└────────────────┬───────────────────┘
                 │
                 ▼
┌────────────────────────────────────┐
│  DETERMINE PIXEL RANGE IN WHICH     │
│  PHOTOELECTRIC CONVERSION ELEMENT   │─── S13
│  102 IS CAUSED TO OPERATE           │
└────────────────┬───────────────────┘
                 │
                 ▼
┌────────────────────────────────────┐
│  ACQUIRE IMAGE SIGNAL BY            │
│  PERFORMING IMAGING THROUGH RANGE   │─── S14
│  GATE CONTROL                       │
└────────────────┬───────────────────┘
                 │
                 ▼
┌────────────────────────────────────┐
│  PERFORM STANDBY PROCESS FOR TIME   │
│  CORRESPONDING TO OPERATING TIME    │─── S15
│  OF NON-OPERATING PIXEL REGION      │
└────────────────┬───────────────────┘
                 │
                 ▼
          ┌─────────────┐
          │     END     │
          └─────────────┘
```

# FIG. 9

```
        ┌─────────────┐
        │    START    │
        └──────┬──────┘
               │
               ▼
┌───────────────────────────────────┐
│ DETERMINE HEIGHT Hc OF CAMERA 100 │─── S11
└───────────────┬───────────────────┘
               │
               ▼
┌───────────────────────────────────┐
│ DETERMINE LIGHT EMISSION TIME OF  │
│ LIGHT EMITTER 200 AND EXPOSURE    │─── S12
│ TIME AND EXPOSURE TIMING OF       │
│ CAMERA 100                        │
└───────────────┬───────────────────┘
               │
               ▼
┌───────────────────────────────────┐
│ DETERMINE PIXEL RANGE IN WHICH    │
│ PHOTOELECTRIC CONVERSION ELEMENT  │─── S13
│ 102 IS CAUSED TO OPERATE          │
└───────────────┬───────────────────┘
               │
               ▼
┌───────────────────────────────────┐
│ ACQUIRE IMAGE SIGNAL BY PERFORMING│
│ IMAGING THROUGH RANGE GATE CONTROL│─── S14
└───────────────┬───────────────────┘
               │
               ▼
        ┌─────────────┐
        │     END     │
        └─────────────┘
```

**EUROPEAN SEARCH REPORT**

Application Number

EP 25 22 2567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/295065 A1 (ARAI KENSUKE [JP] ET AL) 23 September 2021 (2021-09-23) | 1-7,9,10 | INV. G01S7/486 |
| Y | * paragraph [0168] - paragraph [0212]; figures 21-24 * | 8 | G01S7/487 G01S17/18 G01S17/46 |
| X | US 2023/341749 A1 (KATO DAIKI [JP] ET AL) 26 October 2023 (2023-10-26) * paragraph [0105] - paragraph [0107]; figure 8 * | 1-6,9,10 | G01S17/89 G01S17/931 H04N13/204 H04N23/56 G06V10/25 |
| Y | US 2024/210531 A1 (TANEMOTO SHUN [JP] ET AL) 27 June 2024 (2024-06-27) * paragraph [0194] - paragraph [0196] * * paragraph [0048] * | 8 | |
| A | US 2023/286548 A1 (TANAKA SHIN [JP] ET AL) 14 September 2023 (2023-09-14) * paragraph [0040] - paragraph [0143]; figures 1-6 * | 1-10 | |

TECHNICAL FIELDS SEARCHED (IPC)

G01S
H04N

The present search report has been drawn up for all claims

| Place of search | Date of completion of the search | Examiner |
|---|---|---|
| Munich | 12 May 2026 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 2567

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2026

| Patent document cited in search report | Publication date | Patent family member(s) | Publication date |
|---|---|---|---|
| US 2021295065 A1 | 23-09-2021 | CN 113243016 A | 10-08-2021 |
| | | EP 3896645 A1 | 20-10-2021 |
| | | JP 7369921 B2 | 27-10-2023 |
| | | JP WO2020121973 A1 | 28-10-2021 |
| | | US 2021295065 A1 | 23-09-2021 |
| | | WO 2020121973 A1 | 18-06-2020 |
| US 2023341749 A1 | 26-10-2023 | CN 116235108 A | 06-06-2023 |
| | | EP 4184242 A1 | 24-05-2023 |
| | | JP 7653436 B2 | 28-03-2025 |
| | | JP WO2022014416 A1 | 20-01-2022 |
| | | US 2023341749 A1 | 26-10-2023 |
| | | WO 2022014416 A1 | 20-01-2022 |
| US 2024210531 A1 | 27-06-2024 | JP WO2022230760 A1 | 03-11-2022 |
| | | US 2024210531 A1 | 27-06-2024 |
| | | WO 2022230760 A1 | 03-11-2022 |
| US 2023286548 A1 | 14-09-2023 | CN 116736277 A | 12-09-2023 |
| | | EP 4246467 A1 | 20-09-2023 |
| | | JP 2023131720 A | 22-09-2023 |
| | | US 2023286548 A1 | 14-09-2023 |

EPO FORM P0459

For more details about this annex : see Official Journal of the European Patent Office, No. 12/82

**Patent documents cited in the description**

- JP 6293134 B
- JP 2025008965 A